(19) Europäisches Patentamt
European Patent Office
Office européen des brevets

(11) **EP 2 643 928 B1**

(12) **EUROPÄISCHE PATENTSCHRIFT**

(45) Veröffentlichungstag und Bekanntmachung des Hinweises auf die Patenterteilung:
**18.10.2017 Patentblatt 2017/42**

(21) Anmeldenummer: **11856380.8**

(22) Anmeldetag: **23.11.2011**

(51) Int Cl.:
*H02P 6/18* *(2016.01)*  *H02P 21/14* *(2016.01)*
*H02P 23/14* *(2006.01)*

(86) Internationale Anmeldenummer:
**PCT/DE2011/075283**

(87) Internationale Veröffentlichungsnummer:
**WO 2012/097782 (26.07.2012 Gazette 2012/30)**

(54) **VORRICHTUNG ZUR ERMITTLUNG DER ROTORDREHPOSITION EINER ELEKTRISCHEN MASCHINE**

APPARATUS FOR DETERMINING THE ANGULAR POSITION OF THE ROTOR OF AN ELECTRIC MACHINE

DISPOSITIF PERMETTANT DE DÉTERMINER LA POSITION DE ROTATION DU ROTOR D'UNE MACHINE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.11.2010 DE 102010052799**

(43) Veröffentlichungstag der Anmeldung:
**02.10.2013 Patentblatt 2013/40**

(73) Patentinhaber: **Strothmann, Rolf**
**66740 Saarlouis (DE)**

(72) Erfinder: **Strothmann, Rolf**
**66740 Saarlouis (DE)**

(74) Vertreter: **Bernhardt, Reinhold**
**Patentanwälte Bernhardt/Wolff**
**Partnerschaft mbB**
**Europaallee 17**
**66113 Saarbrücken (DE)**

(56) Entgegenhaltungen:
WO-A1-92/01331    DE-A1- 10 220 122
DE-A1-102006 046 637

**Beschreibung**

Die Erfindung betrifft eine Vorrichtung zur Ermittlung der Position des Rotors einer elektrischen Maschine in Bezug auf den Stator, wobei die Maschine mehrere Phasenstränge umfasst, die jeweils wenigstens eine Polwicklung mit einem magnetisierbaren Kern aufweisen, mit Einrichtungen zur Erfassung von Messsignalen, die durch die momentanen, von der Drehposition des Magnetfeldes des Rotors beeinflussten Magnetisierungsgraden der Polwicklungskerne geprägt sind.

Eine solche Vorrichtung geht aus der DE 10 2006 046 637 A1 hervor. Das Magnetfeld des Rotors der elektrischen Maschine magnetisiert die Kerne der Polwicklungen abhängig von der Drehposition des Rotors in unterschiedlichem Maße, woraus unterschiedliche, von der Drehposition abhängige Magnetisierungsgrade und damit unterschiedliche Induktivitäten der Phasenstränge resultieren. Über je eine halbe magnetische Periode bestehen eindeutige Zusammenhänge zwischen den Induktivitäten und der Rotordrehposition. Durch Bestimmung für die Induktivitäten repräsentativer Signale lässt sich die Drehposition des Rotors ermitteln.

Verfahren und Vorrichtungen zur sensorlosen Bestimmung der Rotordrehlage elektrischer Maschinen sind ferner aus der DE 102 20 122 A1 sowie der WO 92/01331 bekannt. Gemäß DE 102 20 122 A1 wird ein Statorflussmuster eingeprägt und die Rotordrehlage anhand einer Winkelabhängigkeit des Stromraumzeigers bei eingeprägten Statorflussmuster von der Rotordrehlage bestimmt. Bei dem aus der WO 92/01331 bekannten Verfahren werden Messspannungen an die Phasenstränge angelegt und zur Bestimmung von Phasenstranginduktivitäten Stromanstiege in den betreffenden Phasensträngen ermittelt. Die US 4 495 450 beschreibt ein Verfahren zur Lagebestimmung des Rotors einer elektrischen Maschine, das auf der Messung in den Phasensträngen induzierter Spannungen beruht.

Der Erfindung liegt die Aufgabe zugrunde, eine neue Vorrichtung der eingangs erwähnten Art zu schaffen, die eine Bestimmung der Drehposition des Rotors mit erhöhter Genauigkeit zulässt.

Die diese Aufgabe lösende Vorrichtung nach der Erfindung ist dadurch gekennzeichnet, dass die eingangs genannten Einrichtungen ferner zur Erfassung zum Betrieb der elektrischen Maschine erzeugter, für die Messsignale maßgeblicher Ströme in den Phasensträngen und zur Bestimmung der Drehposition des Rotors aus den Messsignalen und den Strömen unter Berücksichtigung des Beitrags der erfassten Ströme zu den momentanen Magnetisierungsgraden der Polwicklungskerne, der über den entsprechenden Beitrag des Magnetfeldes des Rotors hinausgeht, vorgesehen sind.

Erfindungsgemäß berücksichtigt die vorliegende Erfindung den Einfluss der jeweiligen Phasenstrangströme auf die Magnetisierungsgrade der Polwicklungskerne, so dass auch dann, wenn neben dem Magnetfeld des Rotors für die Magnetisierungen der Kerne auch das durch die Phasenstrangströme erzeugte Magnetfeld eine wesentliche Rolle spielt, eine präzise Drehlagebestimmung erfolgen kann.

Vorzugsweise werden für die momentanen Induktivitäten der Phasenstränge repräsentative Messsignale ermittelt.

Zwischen den ermittelten Messsignalen und dem Vektor des die elektrische Maschine durchsetzenden Gesamtmagnetflusses besteht über eine halbe magnetische Periode eine eindeutiger, vorbestimmbarer Zusammenhang, so dass aus den Messsignalen ein Rückschluss auf den Magnetflussvektor erfolgen kann. Die erfindungsgemäße Strommessung erlaubt eine Bestimmung des durch die Phasenstrangströme erzeugten Anteils am Gesamtfluss. Die vektorielle Differenz aus dem Gesamtfluss und dem durch die Phasenstrangströme erzeugten Anteil ergibt den Magnetflussvektor des Rotors. Bei bekanntem Magnetflussvektor des Rotors ist auch die Drehposition des Rotors bekannt.

In einer besonders bevorzugten Ausführungsform der Erfindung ist ferner eine Einrichtung zur Bestromung der Phasenstränge zusätzlich zu der das Drehmoment erzeugenden Betriebsbestromung unter Hervorhebung der Signale durch Anhebung des Magnetisierungsgrades der Kerne vorgesehen. Vorteilhaft berücksichtigt die Erfindung nicht nur den Einfluss der Bestromung auf die Messsignale sondern erhöht durch gezielte zusätzliche Bestromung weiter die Genauigkeit der Positionsbestimmung. Der Strom erhöht die Magnetisierungsgrade der Polwicklungskerne, was zu größeren Messsignalen führt, die sich gegenüber Störsignalen deutlicher hervorheben.

Die Bestromungseinrichtung zur zusätzlichen Bestromung ist vorzugsweise zur Veränderung eines zum Vektoranteil des Rotors am Magnetfluss parallelen Vektoranteils des durch die Phasenstrangströme erzeugten Magnetflusses vorgesehen. Vorteilhaft ergibt sich hieraus keinerlei Änderung des Motordrehmoments. Die zusätzliche Bestromung führt allein zu einer Hervorhebung der Messsignale. Vorzugsweise sind die Phasenstränge wenigstens teilweise im Stern verschaltet und die Einrichtungen zur Erfassung der Messsignale sind zur Auswertung des Potentials am Sternpunkt vorgesehen.

Vorzugsweise sind die Einrichtungen zur Erfassung der Messsignale zum Abgreifen von Potentialänderungen, insbesondere am Sternpunkt, vorgesehen, die durch an die Phasenstränge angelegte Spannungsimpulse erzeugt werden.

Vorzugsweise erfassen die Signalerfassungseinrichtungen Messsignale, die mit aufeinanderfolgend an die Phasenstränge angelegten Spannungsimpulsen verbunden sind, wobei die Impulse um ein kurzes Zeitintervall $\Delta t$ zeitversetzt sind, in welchem sich die Position des Rotors praktisch nicht verändert.

Als Messimpulse können auch Impulse verwendet werden, welche der Bestromung der elektrischen Maschine nach dem Pulsweitenmodulationsverfahren (PWM-Verfahren) dienen, wobei die Gleichspannung einer Batterie impulsweise zyklisch an die elektrische Maschine angelegt wird.

Die Erfindung wird nachfolgend anhand von Ausführungsbeispielen und der beiliegenden, sich auf eines dieser Ausführungsbeispiele beziehenden Zeichnungen weiter erläutert. Es zeigen:

Fig. 1    eine schematische Darstellung einer elektrischen Maschine mit einer Vorrichtung nach der Erfindung,

Fig. 2    eine schematische Schnittdarstellung der elektrischen Maschine von Fig. 1,

Fig. 3    eine das Anlegen von Messimpulsen an die elektrische Maschine von Fig. 1 und 2 erläuternde Darstellung,

Fig. 4    eine das Abgreifen von Signalen am Sternpunkt der elektrischen Maschine von Fig. 1 und 2 erläuternde Darstellung, und

Fig. 5    eine Darstellung zur Erläuterung einer zusätzlichen, Messsignale hervorhebenden Bestromung der elektrischen Maschine von Fig. 1 und 2.

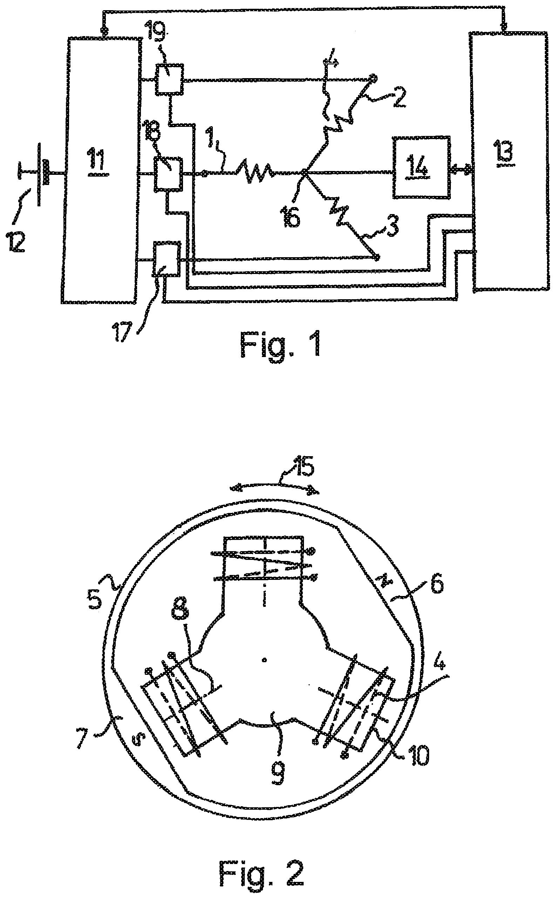

Eine in Fig. 1 und 2 schematisch dargestellte elektrische Maschine weist drei im Stern verschaltete Phasenstränge 1,2,3 mit je einer Polwicklung 4 an einem Stator 9 auf. Die elektrische Maschine umfasst einen Außenrotor 5 mit Permanentmagneten 6,7, die einen Nord- und einen Südpol bilden. Achsen 8 der Polwicklungen 4 stehen zueinander im Winkel von 120 °. Die Polwicklungen sind jeweils durch einen Eisenkern 10 ausgefüllt.

Abweichend von dem gezeigten Ausführungsbeispiel könnte die elektrische Maschine vielpolig ausgebildet sein und mehr als eine Polwicklung pro Phasenstrang sowie anstelle einer einzigen magnetischen Periode mehrere magnetische Perioden mit je einem Nord- und Südpol aufweisen. Auch die Anzahl der Phasenstränge könnte größer oder kleiner als drei sein. Anstelle der gezeigten Verschaltung der Phasenstränge 1,2,3 im Stern wäre auch eine Verschaltung im Dreieck möglich.

Der Bestromung der elektrischen Maschine dient eine Leistungsschalteinrichtung 11, welche die Gleichspannung $U_B$ einer Batterie 12 impulsweise entsprechend dem Pulsweitenmodulationsverfahren (PWM-Verfahren) an die Phasenstränge 1,2,3 anlegt. Die Leistungsschalteinrichtung 11 steht in Verbindung mit einer Steuerschaltung 13, die u.a. die Bestromung der elektrischen Maschine durch die Leistungsschalteinrichtung 11 steuert.

Eine Signalerfassungseinrichtung 14 ist mit dem Sternpunkt 16 sowie der Steuerschaltung 13 verbunden. Über ebenfalls mit der Steuerschaltung verbundene Strommesseinrichtungen 17,18,19 lassen sich Ströme $I_1,I_2,I_3$ in den Phasensträngen 1,2,3 ermitteln.

Je nach der Drehposition des gemäß Pfeil 15 um den Stator 9 drehbaren Außenrotors 5 durchsetzt das Magnetfeld des Außenrotors 5 die mit Eisen gefüllten Polwicklungen 4 des Stators 9 in unterschiedlichem Maße. Entsprechend unterschiedlich sind die in den mit Eisen gefüllten Polwicklungen 4 erzeugten Flussdichten $B_{M1},B_{M2}$ und $B_{M3}$. Insbesondere unterscheiden sich aufgrund des nicht linearen funktionalen Zusammenhangs zwischen der Flussdichte $B_M$ mit Eisen und der Flussdichte B ohne Eisen die Magnetisierungsgrade $dB_M/dB$ der drei Eisenkerne 10. Die durch das Magnetfeld des Außenrotors 5 bewirkten Magnetisierungsgrade hängen über jeweils eine halbe magnetische Periode, also einen Drehwinkelbereich von 180 °, eindeutig von der Drehposition des Außenrotors 5 ab.

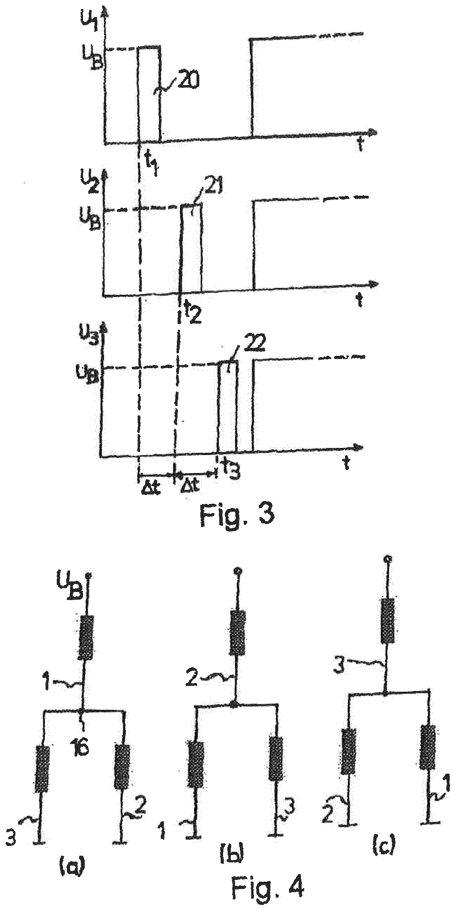

Im Rahmen der Bestromung der elektrischen Maschine nach dem PWM-Verfahren werden in dem gezeigten Ausführungsbeispiel gemäß Fig. 3 und 4 vor jedem PWM-Zyklus um ein Intervall $\Delta t$ zeitversetzt Messimpulse 20,21,23 von der Höhe der Gleichspannung $U_B$ der Batterie 12 aufeinanderfolgend an die Phasenstränge 1,2,3 angelegt. Die Impulsdauer und das Zeitintervall $\Delta t$ sind so klein, dass sich die Drehposition des Außenrotors 5 währenddessen praktisch nicht ändert. Ebenfalls unverändert bleiben während dieser kurzen Zeiträume in den Phasensträngen 1,2,3 fließende Ströme $I_1,I_2,I_3$ und infolge Drehung des Außenrotors 5 in den Phasensträngen induzierte Spannungen.

Für den Abfall der Impulsspannung $U_B$ über den Phasensträngen 1,2,3 sind allein die momentanen Induktivitäten $L_1,L_2,L_3$ der Phasenstränge 1,2,3 maßgebend, in die als Faktor die Magnetisierungsgrade $dB_{m1}/dB$, $dB_{m2}/dB$ und $dB_{m3}/dB$ der betreffenden Eisenkerne 10 der Polwicklungen 4 eingehen.

Die Spannung $U_B$ des zum Zeitpunkt $t_1$ angelegten Impulses 20 fällt gemäß Fig. 4a über dem Phasenstrang 1 und einer sich daran in Reihe anschließenden Paralellschaltung aus den Phasensträngen 2 und 3 ab. Für das Spannungsteilerverhältnis gilt

$$U_{S1} / U_B = L_2 \times L_3 / (L_1 \times L_3 + L_1 \times L_2 + L_2 \times L_3) \tag{1},$$

wobei $U_{S1}$ das Potential am Sternpunkt 16 bezeichnet.

Der zum Zeitpunkt $t_1$ an dem Phasenstrang 1 angelegte Spannungsimpuls löst am Sternpunkt 16 also einen Impuls der Höhe $U_{S1}$ aus, der einem sich vergleichsweise langsam ändernden, durch Induktion erzeugten Spannungswert überlagert sein kann.

Sofern für die momentanen Induktivitäten $L_1,L_2,L_3$ durch die Phasenstränge 1,2,3 fließende Betriebsströme

$I_1,I_2,I_3$ unmaßgeblich sind, ist die Impulshöhe $U_{S1}$ über je eine halbe magnetische Periode eine eindeutige Funktion des Drehwinkels $\alpha$ des Außenrotors 5, wobei die funktionale Änderung des Signals $U_{S1}$ mit dem Winkel $\alpha$ etwa einer Sinus-funktion entspricht.

Für Signale $U_{S2}$ und $U_{S3}$, die durch die zu den Zeitpunkten $t_2$ und $t_3$ an die Phasenstränge 2 und 3 angelegte Spannungsimpulse erzeugt werden, gilt gleiches. Die Signale $U_{S1}$, $U_{S2}$ und $U_{S3}$ sind zueinander um einen Phasenwinkel von 120 ° verschoben. Anhand der Signale lässt sich die jeweilige Drehposition des Rotors bestimmen, wie dies in der hier einbezogenen DE 10 2006 046 637 A1 beschrieben ist. Zur Erzeugung der Signale könnten anstelle gesonderter Spannungsimpulse die im Rahmen der Bestromung nach dem PWM-Verfahren verwendeten Bestromungsimpulse genutzt werden.

Ist infolge größerer Betriebsströme $I_1,I_2,I_3$, schwächerer Magnete des Außenrotors 5 oder/und eines großen Luftspalts für die momentanen Induktivitäten $L_1,L_2,L_3$ nicht nur das Magnetfeld des Außenrotors 5 sondern auch das durch die Betriebsströme $I_1,I_2,I_3$ erzeugte Magnetfeld des Stators 9 maßgebend, so lässt sich aus den Signalen $U_{S1}$, $U_{S2}$ und $U_{S3}$ die Drehposition des Außenrotors 5 nicht unmittelbar bestimmen. In letzterem Fall, in dem in die am Sternpunkt 16 ermittelten Signale $U_{S1}$, $U_{S2}$ und $U_{S3}$ auch die Betriebsströme eingehen, stehen diese Signale innerhalb einer halben magnetischen Periode aber dennoch in einem eindeutigen Zusammenhang zu dem Vektor des Magnet-flusses $\phi$, der die elektrische Maschine durchsetzt und der sich aus der Vektorsumme der Magnetflüsse der drei zueinander im Winkel von 120 ° stehenden Polwicklungen 4 zusammensetzt. Betrachtet man die Signale $U_{S1}$, $U_{S2}$, $U_{S3}$ derart, als bildeten sie zueinander im Winkel von 120 ° stehende Vektoren, so entspricht einem bestimmten Vektor des Mag-netflusses $\phi$ innerhalb der halben magnetischen Periode ein bestimmter Gesamtvektor der Signale $U_{S1}$, $U_{S2}$, $U_{S3}$, die zueinander im Winkel von 120 ° stehende Vektorkomponenten bilden. Aus einem ermittelten Gesamtvektor der Signale $U_{S1}$, $U_{S2}$, $U_{S3}$ lässt sich also umgekehrt auf den Vektor des Magnetflusses $\phi$ schließen.

Ferner kann der vektorielle Anteil des Magnetflusses $\phi_S$ des Stators 9 am gesamten Magnetfluss $\phi$ anhand der Ströme $I_1,I_2,I_3$ bestimmt werden, die sich mit Hilfe der Strommesseinrichtungen 17 bis 19 ermitteln lassen. Der Vekto-ranteil des Magnetflusses $\phi_R$ des Rotors 5 am gesamten Magnetfluss $\phi$ ergibt sich dann aus der vektoriellen Differenz des Magnetflusses $\phi$ und des Statoranteils $\phi_S$:

$$\phi_R = \phi - \phi_S \qquad\qquad (2).$$

Mit der Bestimmung des Vektoranteils $\phi_R$ ist auch die Drehposition des Außenrotors 5 bekannt.

Die sich am Sternpunkt 16 ergebenden Signale $U_{si} - U_B/3$ sind gering, wenn sich die Induktivitäten $L_i$ von Phasenstrang zu Phasenstrang nur wenig unterscheiden, was bei schwachen Magneten des Außenrotors 5, geringen, durch die Phasenstränge fließenden Betriebsströmen $I_1,I_2,I_3$ oder/und großem Luftspalt der Fall sein kann.

Durch zusätzliche Bestromung der elektrischen Maschine lassen sich die Signale jedoch vergrößern, indem die Magnetisierungsgrade $dB_M/dB$ erhöht werden. Die am Sternpunkt ermittelten Signale sind dann gegenüber Störeinflüssen weniger empfindlich.

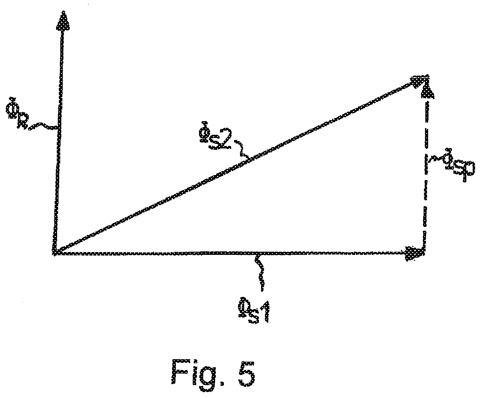

Die zusätzliche Bestromung erfolgt zweckmäßig derart, dass sich das Motordrehmoment infolge dieser Bestromung nicht ändert. Dies kann erreicht werden, indem durch die Bestromung nur ein zum Rotorfluss $\phi_R$ paralleler Anteil $\phi_{sp}$ des Statorflusses $\phi_S$ verändert wird, wie dies Fig. 5 erläutert.

Für die Größe des Motordrehmoments ist das Kreuzprodukt $\phi_S \times \phi_R$ maßgebend. Führt die zusätzliche Bestromung der elektrischen Maschine zu einem Statorfluss $\phi_{S2}$, der sich nur als Summe aus dem ursprünglichen Statorfluss $\phi_{S1}$ und dem zum Rotorfluss parallelen Anteil $\phi_{sp}$ ergibt, so ändert sich das Drehmoment nicht. Der zusätzliche, zum Rotorfluss $\phi_R$ parallele Statorfluss $\phi_{sp}$ trägt aber vorteilhaft zur Hervorhebung der Messsignale bei.

**Patentansprüche**

**1.** Vorrichtung zur Ermittlung der Position des Rotors (5) einer elektrischen Maschine in Bezug auf den Stator (9), wobei die Maschine mehrere Phasenstränge (1,2,3) umfasst, die jeweils wenigstens eine Polwicklung (4) mit einem magnetisierbaren Kern (10) aufweisen, mit Einrichtungen (11-19) zur Erfassung von Messsignalen, die durch die momentanen, von der Drehposition des Magnetfeldes des Rotors (5) beeinflussten Magnetisierungsgraden der Polwicklungskerne (10) geprägt sind,

**dadurch gekennzeichnet,**

**dass** die Einrichtungen (11-19) ferner zur Erfassung zum Betrieb der elektrischen Maschine erzeugter, für die Messsignale maßgeblicher Ströme in den Phasensträngen (1,2,3) und zur Bestimmung der Drehposition des Rotors (5) aus den Messsignalen und den Strömen unter Berücksichtigung des Beitrags der erfassten Ströme zu den momentanen Magnetisierungsgraden der Polwicklungskerne (10), der über den entsprechenden Beitrag des Magnetfeldes des Rotors (5) hinausgeht, vorgesehen sind.

2.  Vorrichtung nach Anspruch 1,
    **dadurch gekennzeichnet,**
    **dass** die Messsignale für die momentanen Induktivitäten der Phasenstränge (1,2,3) repräsentativ sind.

3.  Vorrichtung nach Anspruch 1 oder 2,
    **dadurch gekennzeichnet,**
    **dass** die genannten Einrichtungen (11-19) zum Rückschluss auf den Vektor des die elektrische Maschine durchsetzenden Magnetflusses ($\phi$) aus den ermittelten Messsignalen, zur Ermittlung des durch die Ströme in den Phasensträngen (1,2,3) bewirkten vektoriellen Anteils ($\phi_S$) am Magnetfluss ($\phi$) und zur Bestimmung des vektoriellen Anteils ($\phi_R$) des Magnetfeldes des Rotors (5) am Magnetfluss ($\phi$) aus der Differenz des Magnetflusses ($\phi$) und des vektoriellen Anteils ($\phi_S$) der Phasenstränge (1,2,3) vorgesehen sind.

4.  Vorrichtung nach einem der Ansprüche 1 bis 3,
    **dadurch gekennzeichnet**,
    das eine Einrichtung zur Bestromung der Phasenstränge (1,2,3) zusätzlich zu der das Motordrehmoment erzeugenden Betriebsbestromung unter Hervorhebung der Messsignale durch Anhebung des Magnetisierungsgrades der Polwicklungskerne (10) vorgesehen ist.

5.  Vorrichtung nach Anspruch 4,
    **dadurch gekennzeichnet,**
    **dass** die Bestromungseinrichtung zur Veränderung einer zum Vektoranteil ($\phi_R$) des Rotors (5) parallelen Komponente ($\phi_{sp}$) des Vektoranteils ($\phi_S$) der Phasenstränge (1,2,3) vorgesehen ist.

6.  Vorrichtung nach einem der Ansprüche 1 bis 5,
    **dadurch gekennzeichnet,**
    **dass** die Phasenstränge (1,2,3) wenigstens teilweise im Stern verschaltet sind und die Einrichtungen (11-19) zur Erfassung der Messsignale zur Auswertung des Potentials am Sternpunkt (16) vorgesehen sind.

7.  Vorrichtung nach Anspruch 6,
    **dadurch gekennzeichnet,**
    **dass** die Einrichtungen zur Erfassung der Signale Potentialänderungen erfassen, die mit an die Phasenstränge angelegten Spannungsimpulsen verbunden sind.

8.  Vorrichtung nach Anspruch 7,
    **dadurch gekennzeichnet,**
    **dass** die Einrichtungen (11-19) zur Erfassung der Messsignale Potentialänderungen erfassen, die mit aufeinanderfolgend an die Phasenstränge (1,2,3) angelegten Spannungsimpulsen (20,21,22) verbunden sind.

9.  Vorrichtung nach Anspruch 8,
    **dadurch gekennzeichnet,**
    **dass** die aufeinanderfolgend angelegten Impulse zueinander um ein kurzes Zeitintervall ($\Delta t$) zeitversetzt sind, in dem sich die Position des Rotors (5) nicht ändert.

10. Vorrichtung nach einem der Ansprüche 1 bis 9,
    **dadurch gekennzeichnet,**
    **dass** die elektrische Maschine zur Bestromung durch impulsweises Anlegen einer Gleichspannung ($U_B$) an die Phasenstränge vorgesehen ist und die die Messsignale erzeugenden Spannungsimpulse gleichzeitig Bestromungsimpulse sind.

**Claims**

1.  Apparatus for determining the position of the rotor (5) of an electric machine with respect to the stator (9), wherein the machine comprises a plurality of phase winding sections (1, 2, 3) which each have at least one pole winding (4) with a magnetisable core (10), having devices (11-19) for detecting measurement signals which are affected by the instantaneous degrees of magnetization, influenced by the rotational position of the magnetic field of the rotor (5), of the pole winding cores (10),
**characterized**
**in that** the devices (11-19) are also provided for detecting currents which are generated for the operation of the electric machine and are decisive for the measurement signals, in the phase winding sections (1, 2, 3), and for determining the rotational position of the rotor (5) from the measurement signals and the currents taking into account the contribution by the detected currents to the instantaneous degrees of magnetization of the pole winding cores (10), which contribution goes beyond the corresponding contribution of the magnetic field of the rotor (5).

2. Apparatus according to Claim 1,
**characterized**
**in that** the measurement signals are representative of the instantaneous inductances of the phase winding sections (1, 2, 3).

3. Apparatus according to Claim 1 or 2,
**characterized**
**in that** the specified devices (11-19) are provided for inferring the vector of the magnetic flux ($\phi$), which penetrates the electric machine, from the determined measurement signals, for determining the vectoral component ($\phi S$), brought about by the currents in the phase winding sections (1, 2, 3), on the magnetic flux ($\phi$), and for ascertaining the vectoral component ($\phi R$) of the magnetic field of the rotor (5) on the magnetic flux ($\phi$) from the difference between the magnetic flux ($\phi$) and the vectoral component ($\phi S$) of the phase winding sections (1, 2, 3).

4. Apparatus according to one of Claims 1 to 3,
**characterized**
**in that** a device for energizing the phase winding sections (1, 2, 3) in addition to the operation for or energization which generates the motor torque, emphasizing the measurement signals by raising the degree of magnetization of the pole winding cores (10), is provided.

5. Apparatus according to Claim 4,
**characterized**
**in that** the energization device is provided for changing a component ($\phi sp$), parallel to the vector component ($\phi R$) of the rotor (5), of the vector component ($\phi S$) of the phase winding sections (1, 2, 3).

6. Apparatus according to one of Claims 1 to 5,
**characterized**
**in that** the phase winding sections (1, 2, 3) are connected at least partially in a star configuration, and the devices (11-19) are provided for detecting the measurement signals in order to evaluate the potential at the star point (16).

7. Apparatus according to Claim 6,
**characterized**
**in that** in order to detect the signals the devices detect the changes in the potential which are connected to voltage pulses which are applied to the phase winding sections.

8. Apparatus according to Claim 7,
**characterized**
**in that** in order to detect the measurement signals the devices (11-19) detect changes in potential which are connected to voltage pulses (20, 21, 22) which are successively applied to the phase winding sections (1, 2, 3).

9. Apparatus according to Claim 8,
**characterized**
**in that** the successively applied pulses are offset in respect of timing with respect to one another by a brief time interval ($\Delta t$) in which the position of the rotor (5) does not change.

10. Apparatus according to one of Claims 1 to 9,
**characterized**
**in that** the electric machine is provided for energization by pulsed application of a DC voltage ($U_B$) to the phase winding sections, and the voltage pulses which generate the measurement signals are at the same time energization pulses.

**Revendications**

1. Dispositif de détermination de la position du rotor (5) d'une machine électrique par rapport au stator (9), la machine comprenant plusieurs conducteurs de phase (1, 2, 3) qui présentent chacun au moins un enroulement polaire (4) comprenant un noyau aimantable (10), comportant des moyens (11 à 19) pour saisir des signaux de mesure qui sont affectés par les degrés de magnétisation momentanés des noyaux (10) de l'enroulement polaire influencés par la position de rotation du champ magnétique du rotor (5),
**caractérisé en ce que**
les moyens (11 à 19) sont prévus en outre pour détecter des courants dans les conducteurs de phase (1, 2, 3), générés pour le fonctionnement de la machine électrique et décisifs pour les signaux de mesure, et pour définir la position de rotation du rotor (5) à partir des signaux de mesure et des courants en prenant en compte la contribution des courants détectés dans les degrés de magnétisation momentanés des noyaux (10) de l'enroulement polaire, qui dépasse au-delà de la contribution correspondante du champ magnétique du rotor (5).

2. Dispositif selon la revendication 1,
**caractérisé en ce que**
les signaux de mesure sont représentatifs pour les inductances momentanées des conducteurs de phase (1, 2, 3).

3. Dispositif selon la revendication 1 ou 2,
**caractérisé en ce que**
lesdits moyens (11 à 19) sont prévus pour conclure quant au vecteur du flux magnétique ($\phi$) traversant la machine électrique à partir des signaux de mesure déterminés, pour déterminer la proportion vectorielle ($\phi_S$) au flux magnétique ($\phi$), causée par les courants dans les conducteurs de phase (1, 2, 3), et pour déterminer la proportion vectorielle ($\phi_R$) du champ magnétique du rotor (5) au flux magnétique ($\phi$) à partir de la différence du flux magnétique ($\phi$) et de la proportion vectorielle ($\phi_S$) des conducteurs de phase (1, 2, 3).

4. Dispositif selon l'une des revendications 1 à 3,
**caractérisé en ce que**
il est prévu un moyen pour l'alimentation en courant des conducteurs de phase (1, 2, 3), en supplément à l'alimentation en courant de fonctionnement générant le couple de rotation du moteur, en accentuant les signaux de mesure par augmentation du degré de magnétisation des noyaux (10) de l'enroulement polaire.

5. Dispositif selon la revendication 4,
**caractérisé en ce que**
le moyen d'alimentation en courant est prévu pour modifier une composante ($\phi_{sp}$) de la proportion vectorielle ($\phi_S$) des conducteurs de phase (1, 2, 3), laquelle est parallèle à la proportion vectorielle ($\phi_R$) du rotor (5).

6. Dispositif selon l'une des revendications 1 à 5,
**caractérisé en ce que**
les conducteurs de phase (1, 2, 3) sont connectés entre eux au moins partiellement en étoile et les moyens (11 à 19) pour saisir les signaux de mesure sont prévus pour évaluer le potentiel au point neutre de l'étoile (16).

7. Dispositif selon la revendication 5,
**caractérisé en ce que**
les moyens pour saisir les signaux détectent des modifications du potentiel qui sont liées à des impulsions de tension appliquées aux conducteurs de phase.

8. Dispositif selon la revendication 7,
**caractérisé en ce que**
les moyens (11 à 19) pour détecter les signaux de mesure détectent des modifications du potentiel qui sont liées à des impulsions de tension (20, 21, 22) appliquées successivement aux conducteurs de phase (1, 2, 3).

9. Dispositif selon la revendication 8,
**caractérisé en ce que**
les impulsions appliquées successivement sont décalées dans le temps les unes par rapport aux autres d'un court intervalle de temps ($\Delta t$) dans lequel la position du rotor (5) ne se modifie pas.

10. Dispositif selon l'une des revendications 1 à 9,

**caractérisé en ce que**

la machine électrique est prévue pour l'alimentation en courant par application par impulsions d'une tension continue ($U_B$) aux conducteurs de phase, et les impulsions de tension générant les signaux de mesure sont simultanément des impulsions d'alimentation en courant.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006046637 A1
- DE 10220122 A1
- WO 9201331 A
- US 4495450 A